# EUROPÄISCHE PATENTSCHRIFT

(11) **EP 3 295 039 B1**
(45) Veröffentlichungstag und Bekanntmachung des Hinweises auf die Patenterteilung: **06.11.2019**
(21) Anmeldenummer: 16727932.2
(22) Anmeldetag: 10.05.2016
(51) Int. Cl.: F16B 12/24, F16B 21/00

(54) **BOLZENHALTEVORRICHTUNG UND VERBINDUNGSSYSTEM**
BOLT HOLDING DEVICE AND CONNECTING SYSTEM
DISPOSITIF DE BLOCAGE DE CHEVILLES ET SYSTÈME D'ASSEMBLAGE

(30) Priorität: 12.05.2015 DE 102015005937
(43) Veröffentlichungstag der Anmeldung: 21.03.2018
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2016/000195
(87) Internationale Veröffentlichungsnummer: WO 2016/180391

(56) Entgegenhaltungen:
- EP-A1- 1 406 022
- DE-A1- 2 942 423
- DE-U1- 29 608 177

## Beschreibung

Die Erfindung betrifft eine Bolzenhaltevorrichtung mit einer Bolzeneinzugsvorrichtung zur Befestigung eines Bolzens, ein System mit zwei derartigen Bolzenhaltevorrichtungen sowie ein Möbelstück mit zwei Möbelstückteilen und einem Verbindungssystem.

Aus der EP 1 406 022 A1 ist eine Bolzenhaltevorrichtung bekannt, bei der ein Bolzen durch Verklemmen in zwei schräg zur Bolzenachse liegenden Federblechen und zusätzlich durch eine Bajonettsicherung befestigt ist. Die Federbleche können nur in einen Hohlraum montiert werden. Das Einsetzen des Bolzens erfordert ein Werkzeug zum Drehen des Bolzens um seine Längsachse.

Die DE 29 42 423 A1 offenbart eine wiederholt einsetzbare Schließe für Schmuckgegenstände, bei der ein Stift kraftschlüssig und lösbar mittels einer entgegen der Einschubrichtung wirkenden Feder gehalten ist.

Der vorliegenden Erfindung liegt die Aufgabe zugrunde, eine schnell und problemlos montierbare Bolzenhaltevorrichtung zur weitgehend werkzeuglosen Endmontage eines Bolzens sowie ein Verbindungssystem mit zwei derartigen Bolzenhaltevorrichtungen zu entwickeln.

Diese Problemstellung wird mit den Merkmalen des Hauptanspruches gelöst.

Das System mit zwei derartigen Bolzenhaltevorrichtungen ist derart aufgebaut, dass die Bolzeneinführrichtungen der Bolzenhaltevorrichtungen entgegengesetzt orientiert sind. Zur Bildung eines Verbindungssystems ist ein zylindrisch ausgebildeter, gewindeloser Bolzen in beide Bolzenhaltevorrichtungen einsetzbar und fixierbar.

Das Möbelstück umfasst zwei Möbelstückteile, die mittels eines Verbindungssystems verbunden sind. Das Verbindungssystem weist zwei Bolzenhaltevorrichtungen und einen in beide Bolzenhaltevorrichtungen eingesetzten Bolzen auf.

Weitere Einzelheiten der Erfindung ergeben sich aus den Unteransprüchen und der nachfolgenden Beschreibung schematisch dargestellter Ausführungsformen.
- Figur 1:: Bolzenhaltevorrichtung;
- Figur 2:: Längsschnitt der Bolzenhaltevorrichtung aus Figur 1;
- Figur 3:: Einsetzhülse;
- Figur 4:: Rückhalte- und Führungselement;
- Figur 5:: Anschlagdeckel;
- Figur 6:: Klemmscheibe;
- Figur 7:: Bolzenhaltevorrichtung in einem Möbelstückteil;
- Figur 8:: Bolzenhaltevorrichtung mit eingesetztem Bolzen;
- Figur 9:: Bolzenhaltevorrichtung mit gesichertem Bolzen;
- Figur 10:: Bolzenhaltevorrichtung als Bolzensicherung;
- Figur 11:: Verbindungssystem mit zwei Bolzenhaltevorrichtungen;
- Figur 12:: Bolzenhaltevorrichtung mit zusätzlicher Auszugssicherung;
- Figur 13:: Bolzenhaltevorrichtung mit integrierter Auszugssicherung;
- Figur 14:: Bolzenhaltevorrichtung mit an der Einsetzhülse sichernden Auszugssicherung;
- Figur 15:: Bolzenhaltevorrichtung mit aneinanderliegenden Klemmscheiben;
- Figur 16:: Variante einer Bolzenhaltevorrichtung;
- Figur 17:: Bolzenhaltevorrichtung aus Figur 16 mit eingezogenem Bolzen;
- Figur 18:: Bolzenhaltevorrichtung aus Figur 16 mit aktivierter Auszugssicherung.

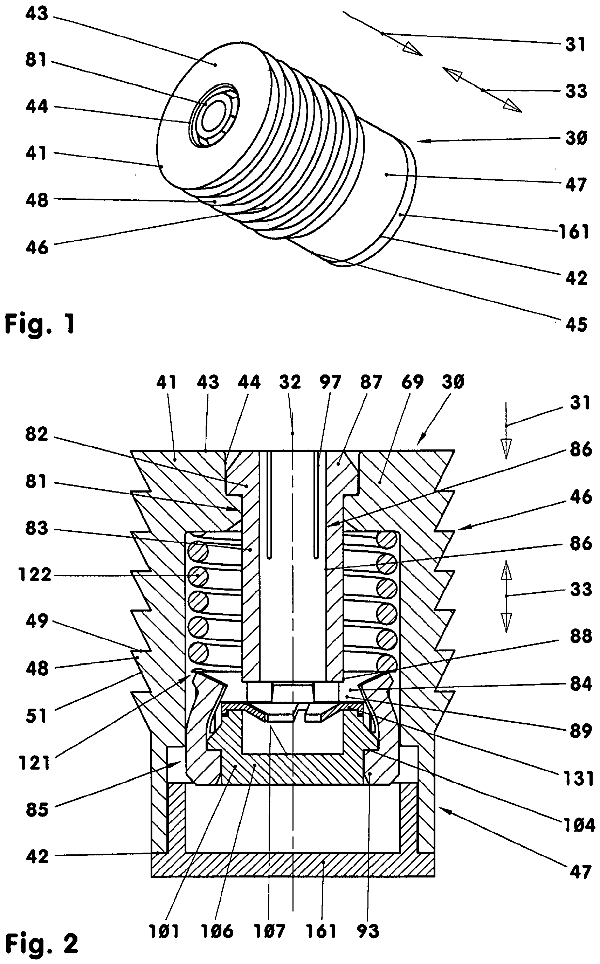

Die Figur 1 zeigt eine Bolzenhaltevorrichtung (30). Mit einer derartigen Bolzenhaltevorrichtung (30) werden gewindefreie, z.B. zylindrische Bolzen (20) gehalten und gesichert.

Die Bolzenhaltevorrichtung (30) umfasst eine Einsetzhülse (41), die an ihrer Rückseite (42) mittels eines Schutzdeckels (161) verschlossen ist. Der Schutzdeckel (161) ist als Einsteckdeckel ausgebildet, der an der Rückseite (42) an der Einsetzhülse (41) anliegt. An ihrer in der Figur 1 dem Betrachter zugewandten Stirnseite (43) ist in einer Einführöffnung (44) der Einsetzhülse (41) ein Rückhalte- und Führungselement (81) angeordnet. Im Folgenden zeigt die Bolzeneinführrichtung (31) von der Stirnseite (43) aus in Richtung des Schutzdeckels (161). Die

Bolzeneinführrichtung (31) ist in der Längsrichtung (33) der Bolzenhaltevorrichtung (30) orientiert.

Die Einsetzhülse (41) hat eine ringförmige Querschnittsfläche. Ihre Mantelfläche (45) umfasst einen an die Stirnseite (43) angrenzenden stufenartig ausgebildeten Halteabschnitt (46) und einen dem Schutzdeckel (161) zugewandten, zylindrisch ausgebildeten Führungsabschnitt (47). Die Länge des Halteabschnitts (46) beträgt beispielsweise 70 % der Länge der Einsetzhülse (41).

Die Figur 2 zeigt einen Längsschnitt der in der Figur 1 dargestellten Bolzenhaltevorrichtung (30). Der Halteabschnitt (46) weist koaxial zur gedachten Mittellinie (32) der Bolzenhaltevorrichtung (30) angeordnete Halteringe (48) auf. Im Ausführungsbeispiel hat die Einsetzhülse (41) sieben äquidistant zueinander angeordnete Halteringe (48), die alle den gleichen dreiecksförmigen Querschnitt aufweisen. Sie haben eine normal zur Bolzeneinführrichtung (31) liegende Stützfläche (49) und eine sich in der Bolzeneinführrichtung (31) verjüngende, kegelstumpfförmig ausgebildete Gleitfläche (51). Der gedachte Spitzenwinkel der Gleitfläche (51) beträgt beispielsweise 54 Grad. Der Außendurchmesser des Halteabschnitts (46) ist in der Darstellung der Figuren 1 und 2 um 14 % größer als der Außendurchmesser des Führungsabschnitts (47). Die Stützflächen (49) können auch kegelstumpfförmig ausgebildet sein, wobei der gedachte Kegel in die gleiche Richtung zeigt wie der gedachte Kegel der Gleitflächen (51). Die Halteringe (48) können auch unterbrochen ausgebildet sein. Ebenfalls ist es denkbar, den Halteabschnitt (46) mit einer spiralförmigen Struktur auszubilden.

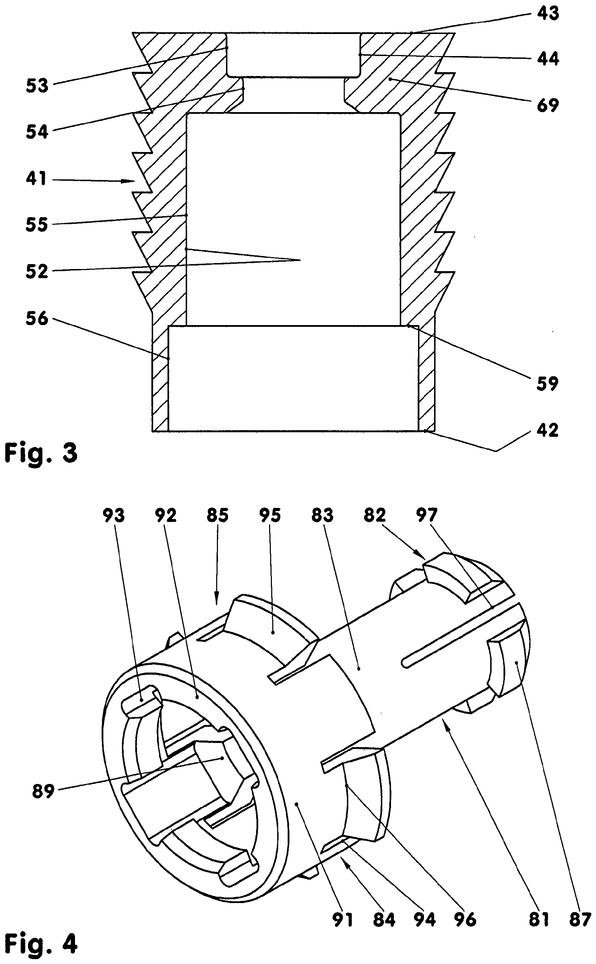

Die Figur 3 zeigt einen Längsschnitt der Einsetzhülse (41). Die Einsetzhülse (41) ist topfförmig ausgebildet und hat einen an die Stirnseite (43) angrenzenden Boden (69). Die von der Einführöffnung (44) ausgehende Innenwandung (52) der Einsetzhülse (41) hat beispielsweise vier Abschnitte (53 - 56) unterschiedlichen Innendurchmessers. An die Stirnseite (43) grenzt ein Aufnahmeabschnitt (53) an. Sein Durchmesser beträgt im Ausführungsbeispiel 41 % des Außendurchmessers des Halteabschnitts (46). Die Länge des Aufnahmeabschnitts (53) beträgt z.B. 11 % der Länge der Einsetzhülse (41).

An den Aufnahmeabschnitt (53) schließt ein zentraler Durchbruch (54) an. Sein Durchmesser beträgt in diesem Ausführungsbeispiel 31 % des Außendurchmessers des Halteabschnitts (46) und seine Länge beträgt 31 % der Länge der Einsetzhülse (41).

Der Durchmesser des an den Durchbruch (54) anschließenden Federsitzabschnitts (55) beträgt in der in den Figuren 1 - 3 dargestellten Einsetzhülse (41) 66 % des maximalen Außendurchmessers der Einsetzhülse (41). In der Längsrichtung (33) beträgt die Länge des Federsitzabschnitts (55) in diesem Ausführungsbeispiel 54 % der Länge der Einsetzhülse (41).

Ein Sicherungsabschnitt (56) verbindet den Federsitzabschnitt (55) mit der der Stirnseite (43) abgewandten Rückseite (42). Der Durchmesser dieses Sicherungsabschnitts (56) beträgt 77 % des Außendurchmessers des Halteabschnitts (46).

Die Einsetzhülse (41) ist beispielsweise aus einem z.B. thermoplastischen Kunststoff hergestellt. Es ist aber auch denkbar, sie aus einem metallischen Werkstoff, beispielsweise Stahl, Guss oder Aluminium, herzustellen. Die Einsetzhülse (41) ist in diesem Ausführungsbeispiel einteilig ausgebildet. Die Einsetzhülse (41) kann jedoch auch zweiteilig ausgeführt sein. Sie hat dann eine in der Längsrichtung (33) orientierte Trennfuge. In dieser Trennfuge können Formschlusselemente zur gegenseitigen Zentrierung der z.B. identischen Hälften der Einsetzhülse (41) angeordnet sein. Zusätzlich können die beiden Hälften z.B. kraft- oder stoffschlüssig, beispielsweise mittels Klebstoff fixiert sein.

In der Einsetzhülse (41) ist in den Darstellungen der Figuren 1 und 2 ein Rückhalte- und Führungselement (81) angeordnet. Die Figur 4 zeigt ein derartiges Rückhalte- und Führungselement (81) vor dem Einbau. Das Rückhalte- und Führungselement (81) ist beispielsweise aus dem gleichen Werkstoff hergestellt wie die Einsetzhülse (41).

Das Rückhalte- und Führungselement (81) umfasst einen Stützbereich (82), einen Führungsbereich (83), eine Tragvorrichtung (84) und eine Rückhaltevorrichtung (85). Im Ausführungsbeispiel hat das Rückhalte- und Führungselement (81) eine zentrale, in Längsrichtung (33) orientierte Längsbohrung (86).

Mit dem Stützbereich (82) liegt das Rückhalte- und Führungselement (81) im Aufnahmeabschnitt (53) der Einsetzhülse (41). Der Stützbereich (82) hat einzelne Stützelemente (87), die in den Darstellungen der Figuren 1 und 2 bündig sind mit der Stirnseite (43) der Einsetzhülse (41). Der Stützbereich (82) ist beispielsweise in Richtung der Stirnseite (43) verjüngt ausgebildet.

Der Führungsbereich (83) ist im Ausführungsbeispiel ein zylindrisches Rohr, das die Längsbohrung (86) umgibt. Sein über die Länge konstanter Innendurchmesser beträgt z.B. 21 % des Außendurchmessers des Halteabschnitts (46). Sein Außendurchmesser ist beispielsweise so ausgebildet, dass der Führungsbereich (83) mit einer Spielpassung oder mit einer Übergangspassung im Durchbruch (54) der Einsetzhülse (41) liegt. Die Länge des Führungsbereichs (83) beträgt z.B. 57 % der Länge der Einsetzhülse (41).

Im Stützbereich (82) und im Führungsbereich (83) hat das Rückhalte- und Führungselement (81) beispielsweise vier Längsschlitze (97). Ihre Länge beträgt z.B. zwei Drittel der Länge des Führungsabschnitts (83). Es ist auch denkbar, das Rückhalte- und Führungsteil (81) z.B. beim Einsatz in einer zweiteiligen Einsetzhülse (41) ohne Längsschlitze (97) auszuführen.

An dem der Stirnseite (43) abgewandten Ende schließt sich die Tragvorrichtung (84) an. Die Anbindungen der Tragvorrichtung (84) an den Führungsbereich (83) sind als Scherverbindungen (88) ausgelegt. Beispielsweise sind die Scherflächen zwischen dem Führungsbereich (83) und der Tragvorrichtung (84) scharfkantig und mit einer geringen Querschnittsfläche ausgebildet.

Die Tragvorrichtung (84) hat die Gestalt eines Topfes. Der Tragboden (89) des Topfes liegt auf dem Führungsbereich (83) auf. Außerdem umgibt er den Führungsbereich (83) und ist an diesem mittels der Scherverbindungen (88) fixiert. Hierbei sind sowohl der Tragboden (89) als auch der Führungsbereich (83) in Bezug auf eine in der Längsrichtung (33) orientierte Belastung verformungssteif ausgebildet.

Der an den Tragboden (89) angrenzende Mantel (91) ist koaxial zur Mittellinie (32) ausgebildet und in die der Stirnseite (43) abgewandte Richtung orientiert. An seinem vom Tragboden (89) beabstandetem umlaufenden Rand (92) weist er beispielsweise vier in Richtung der Mittellinie (32) orientierte Halteelemente (93) auf. Der Mantel (91) hat Durchbrüche (94), in denen am Mantel (91) befestigte Auszugssicherungselemente (95) angeordnet sind. Die Verbindungen der Auszugssicherungselemente (95) zum Rand (92) sind als Filmgelenke (96) ausgebildet. In der in der Figur 4 dargestellten unbelasteten Stellung sind die Auszugssicherungselemente (95) nach außen abgespreizt. Bespielsweise schließen sie mit der Längsrichtung (33) einen Winkel von 45 Grad ein, wobei sie in die dem Rand (92) abgewandte Richtung zeigen. Die Tragvorrichtung (84) kann auch ohne Auszugssicherungselemente (95) ausgeführt sein.

In der in der Figur 2 dargestellten Einbaulage sind die Filmgelenke (96) verformt. Die Auszugssicherungselemente (95) liegen an der Innenwandung des Federsitzabschnitts (55) an.

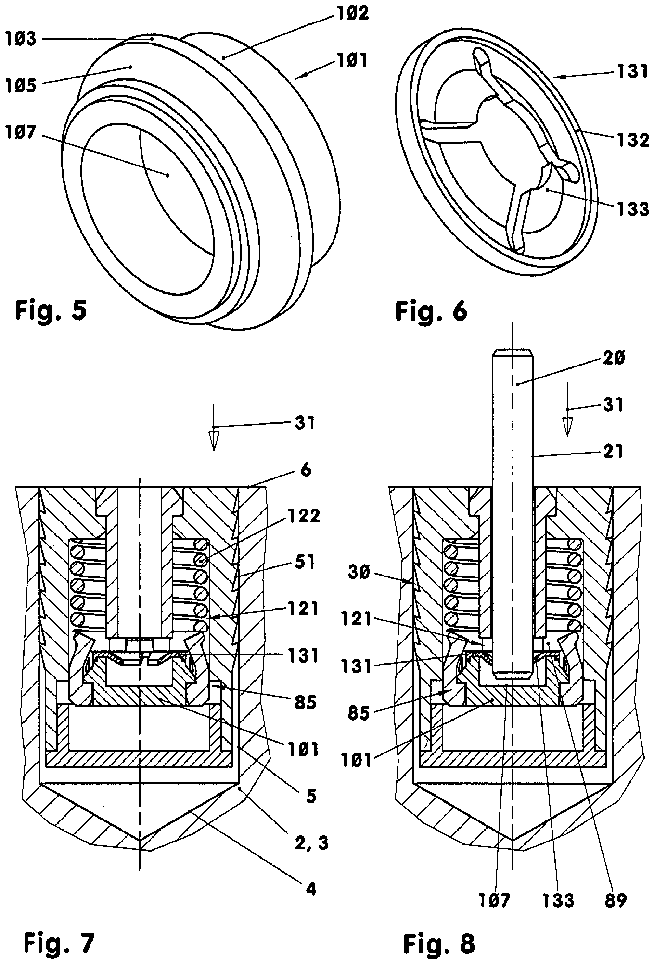

Die Halteelemente (93) des Rückhalte- und Führungselements (81) halten in der Darstellung der Figur 2 einen Anschlagdeckel (101). Die Figur 5 zeigt den Anschlagdeckel (101) als Einzelteil. Der Anschlagdeckel (101) hat eine kreisförmige Querschnittsfläche, die normal zur Längsrichtung (33) angeordnet ist. An seiner Mantelfläche (102) weist er einen Umlaufbund (103) auf. Dieser hat eine plane, der Stirnseite (43) abgewandte Rastfläche (104) und eine kegelförmig ausgebildete, der Stirnseite (43) zugewandte Gleitfläche (105). Auf der der Stirnseite (43) abgewandten Seite wird der Anschlagdeckel (101) mittels einer einen Anschlagboden (106) bildenden Anschlagscheibe (106) begrenzt. Diese hat z.B. eine konstante Dicke von 7,5 % der Länge der Einsetzhülse (43). Die Innenseite der Anschlagscheibe (106) bildet eine Anschlagfläche (107).

In der Einsetzhülse (41) ist weiterhin ein Federenergiespeicher (122) angeordnet. In der Darstellung der Figur 2 ist dies eine Schraubenfeder (122) in der Bauform einer Druckfeder. Sie stützt sich vorgespannt am Boden (69) der Einsetzhülse (41) und am Tragboden (89) des Rückhalte- und Führungselements (81) ab. Die Federkraft beträgt beispielsweise 170 Newton. Anstatt als Schraubenfeder kann der Federenergiespeicher (122) auch als Tellerfederpaket, Elastomerkörper, etc. ausgebildet sein. Der Federenergiespeicher (122) kann auch aus mehreren Federelementen (122) bestehen.

Zwischen dem Rückhalte- und Führungselement (81) und dem Anschlagdeckel (101) liegt eine Klemmscheibe (131). Die Figur 6 zeigt eine derartige Klemmscheibe (131). Die Klemmscheibe (131) ist eine ringförmige, gewölbte Federscheibe. Sie hat einen Tragring (132), an dem z.B. vier nach innen ragende nasenförmige Klemmsegmente (133) angeordnet sind. Der von den Klemmsegmenten (133) begrenzte Innendurchmesser der Federscheibe (131) beträgt beispielsweise 75 % - 99 % des Nenndurchmessers der Federscheibe (131). Der Nenndurchmesser der Federscheibe (131) ist der Außendurchmesser eines in die Federscheibe (131) einzusetzenden Bolzens (20). Der Außendurchmesser der Federscheibe (131) ist beispielsweise 1,5- bis 6,5-mal so groß wie der Nenndurchmesser. Die Gesamthöhe der Federscheibe (131) beträgt zwischen 12 % und 81 % des Nenndurchmessers. Die Materialstärke beträgt beispielsweise 15,5 % der Gesamthöhe. Die Federscheibe (131) ist z.B. aus einem Federstahl hergestellt. Dieser kann austenitisch sein. Anstatt der dargestellten Federscheibe (131) ist auch der Einsatz einer Scheibe denkbar, die mit einer Normalen zur Längsrichtung einem Winkel zwischen 0,5 Grad und 15 Grad einschließt.

Bei der Montage der Bolzenhaltevorrichtung (30) werden z.B. zunächst die Federscheibe (131) und der Anschlagdeckel (101) auf das Rückhalte- und Führungselement (81) aufgesetzt. Auf den Führungsbereich (83) wird die Druckfeder (122) aufgeschoben und komprimiert. Diese Vormontageeinheit wird unter elastischer Verformung der Auszugssicherungselemente (95) und des Stützbereichs (82) von der Rückseite (42) aus in die Einsetzhülse (41) eingeschoben, sodass die Auszugssicherungselemente (95) an der Innenwandung des Federsitzabschnitts (55) anliegen. Hiernach kann die Einsetzhülse (41) mittels des Schutzdeckels (161) verschlossen werden.

Beim Einsatz einer zweiteiligen Einsetzhülse (41) wird die Vormontageeinheit in eine Schale der Einsetzhülse (41) eingelegt. Anschließend wird die Einsetzhülse (41) mittels der zweiten Schale verschlossen.

In der so montierten Bolzenhaltevorrichtung (30) bildet der Federenergiespeicher (122) zusammen mit der Klemmscheibe (131) eine Bolzeneinzugsvorrichtung (121). Diese wirkt in der Bolzeneinführrichtung (31), die im Folgenden auch als Bolzeneinzugsrichtung (31) bezeichnet ist. Die Bolzeneinzugsvorrichtung (121) wird durch eine Rückhaltevorrichtung (85) blockiert. Hierbei verhindert das Rückhalte- und Führungselement (81) mit seiner Tragvorrichtung (84) ein Entspannen des Federenergiespeichers (122). Das Auslöseelement (101) ist formschlüssig mit der Rückhaltevorrichtung (85) verbunden.

Die Figur 7 zeigt die in den Figuren 1 - 6 dargestellte Bolzenhaltevorrichtung (30) in einer Sacklochbohrung (4) eines Möbelstückteils (2; 3). Das Möbelstückteil (2; 3) besteht beispielsweise aus Holz. Die Gleitflächen (51) der Halteringe (48) liegen bereichsweise an der Wandung (5) der Sacklochbohrung (4) an. Die Halteringe (48) verhaken sich im Holz, sodass ein Herausziehen der Bolzenhaltevorrichtung (30) verhindert wird. Gegebenenfalls ist auch eine zusätzliche kraft- und/oder formschlüssige Sicherung der Bolzenhaltevorrichtung (30) im Möbelstückteil (2; 3) denkbar. Die Bolzenhaltevorrichtung (30) kann zusätzlich im Möbelstückteil (2; 3) verklebt sein. Nach dem Einsetzen der Bolzenhaltevorrichtung (30) in das Möbelstückteil (2; 3) ist die Stirnseite (43) beispielsweise bündig mit einer Oberfläche (6) des Möbelstückteils (2; 3).

In der Figur 8 ist die Bolzenhaltevorrichtung aus der Figur 7 mit bereichsweise eingesetztem Bolzen (20) dargestellt. Der Bolzen (20) ist ein gewindefreier Bolzen, der im Ausführungsbeispiel ohne Nut ausgebildet ist. Der dargestellte Bolzen (20) ist ein Zylinderbolzen. Auch eine kegelförmige und/oder eine taillierte Ausführung des Bolzens (20) sind denkbar. Der Bolzen (20) kann aus Stahl, Aluminium, Holz, Kunststoff oder aus einem anderen Werkstoff hergestellt sein. Gegebenenfalls kann der Elastizitätsmodul des Bolzenwerkstoffs dem Elastizitätsmodul des Werkstoffs der Einsetzhülse (41) und/oder des Rückhalte- und Führungselements (81) entsprechen.

Der in der Figur 8 dargestellte Bolzen (20) durchdringt in dem dargestellten Zwischenzustand die Klemmscheibe (131), deren Klemmsegmente (133) in der Bolzeneinführrichtung (31) verformt sind. Die Klemmsegmente (133) schmiegen sich an die Mantelfläche (21) des Bolzens (20) an. Sie verhindern damit ein Zurückziehen des Bolzens (20) relativ zur Klemmscheibe (131), die am Tragboden (89) des Rückhalte- und Führungsteils (81) anliegt. Ein Verschieben der Klemmscheibe (133) in der Bolzeneinführrichtung (31) ist mittels des Anschlagdeckels (101) blockiert, der von den Halteelementen (93) des Rückhalte- und Führungsteils (81) gehalten ist. Gegebenenfalls kann der Bolzen (20) beim Einsetzen die Einsetzhülse (41) spreizen. Der Bolzen (20) ist dann z.B. kegelförmig oder doppelkegelförmig ausgebildet. Der Umfang der Einsetzhülse (41) wird dann beim Einsetzen des Bolzens (20) vergrößert, sodass sich die Einsetzhülse (41) zusätzlich im Holz verhakt.

Beim weiteren Einschieben des Bolzens (20) gleiten die Klemmsegmente (133) weiter entlang der Mantelfläche (21) des Bolzens (20). Dieses Einschieben erfolgt mit weitgehend konstanter Kraft zunächst so weit, bis der Bolzen (20) an die Anschlagfläche (107) des Anschlagdeckels (101) anstößt. In dieser Position steigt der Widerstand gegen ein weiteres Einschieben des Bolzens (20) in die Bolzenhaltevorrichtung (30) an.

Beim Eindrücken oder Einpressen des Bolzens (20) gegen diesen Widerstand verschiebt der Bolzen (20) den verformungssteifen Anschlagdeckel (101) relativ zur Einsetzhülse (41). Der Anschlagdeckel (101) belastet die Tragvorrichtung (84) des Rückhalte- und Führungselements (81) in der Bolzeneinführrichtung (31), während der Führungsbereich (83) mittels des Stützbereichs (82) in seiner Lage gehalten wird. Die Scherverbindungen (88) werden aufgrund dieser Belastung getrennt. Der Führungsbereich (83) verbleibt in seiner Lage relativ zur Einsetzhülse (41). Die Tragvorrichtung (84) wird mittels des Bolzens (20) und des Anschlagdeckels (101) in der Bolzeneinführrichtung (31) verschoben. Das Auftrennen der Rückhaltevorrichtung (85) entsperrt die Bolzeneinzugsvorrichtung (121). Der sich entspannende Federenergiespeicher (122) verstärkt die Einzugsbewegung des Bolzens (20) in die Bolzeneinzugsrichtung (31).

Die die Klemmscheibe (131) tragende Tragvorrichtung (84) wird mittels des Federenergiespeichers (122) und/oder mittels des Bolzens (20) weiter in der Einzugsrichtung (31) relativ zur Einsetzhülse (41) verschoben. Sobald die Auszugssicherungselemente (95) den Sicherungsabschnitt (56) erreichen, verformen sie sich sprungartig elastisch in Richtung ihrer in der Figur 4 dargestellten Ausgangslage zurück. Hierbei legen sie sich an die Innenwandung des Sicherungsbereichs (56) an.

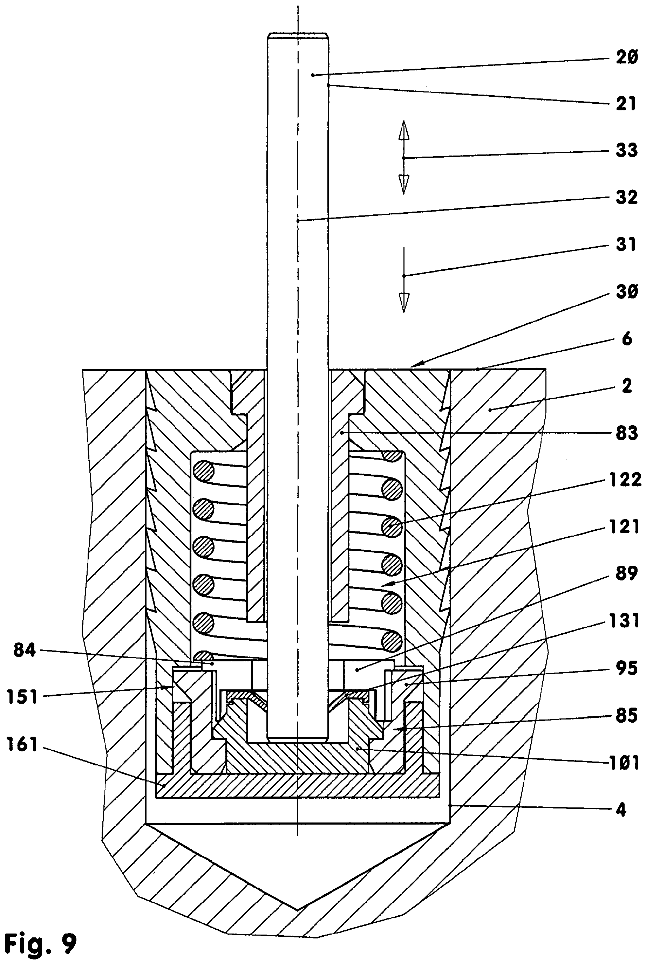

Die Figur 9 zeigt die Bolzenhaltevorrichtung (30) mit einem eingezogenen und gesicherten Bolzen (20). Bei einer Belastung des Bolzens (20) entgegen der Bolzeneinzugsrichtung (31) verhaken sich die Auszugssicherungselemente (95) an der Übergangsfläche (59) des Sicherungsabschnitts (56) zum Federsitzabschnitt (55). Die Übergangsfläche (59) bildet zusammen mit den Auszugssicherungselementen (95) eine Auszugssicherung (151). Bei einer Belastung des Bolzens (20) entgegen der Bolzeneinzugsrichtung (31) ist dieser blockiert. Der Federenergiespeicher (122) erfährt keine zusätzliche Belastung.

Die Bolzenhaltevorrichtung (30) kann beispielsweise vom Möbelhersteller problemlos in eine Durchgangs- oder in eine Sacklochbohrung (4) eingesetzt werden. Bei der Montage des Möbelstücks kann der Endverbraucher ohne den Einsatz von Werkzeug den Bolzen (20) in der Bolzenhaltevorrichtung (30) sichern.

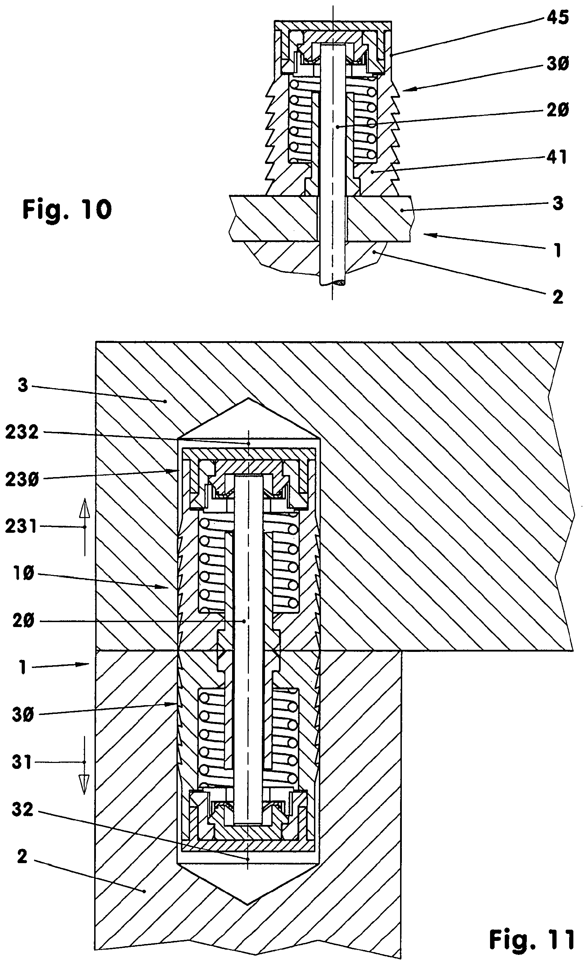

Die Figur 10 zeigt eine Bolzenhaltevorrichtung (30), die ein freies Ende eines Bolzens (20) sichert. Beispielsweise ist der Bolzen (20) in einem ersten Möbelstückteil (2) eines Möbelstücks (1) gesichert. Auf dem ersten Möbelstückteil (2) liegt ein zweites Möbelstückteil (3), z.B. ein Brett, das mittels des Bolzens (20) und der Bolzenhaltevorrichtung (30) gehalten ist. In diesem Ausführungsbeispiel kann die Einsteckhülse (41) eine zylindrische Mantelfläche (45) ohne Haltebereich (46) aufweisen. Das Sichern des Bolzens (20) in der Bolzenhaltevorrichtung (30) erfolgt, wie im Zusammenhang mit dem ersten Ausführungsbeispiel beschrieben.

Die Figur 11 zeigt ein Verbindungssystem (10) mit zwei Bolzenhaltevorrichtungen (30, 230) und einem gemeinsamen Verbindungsbolzen (20) in einem Möbelstück (1). Dieses Möbelstück (1) hat zwei mittels des Verbindungssystems (10) verbundene Möbelstückteile (2, 3). Beide Bolzenhaltevorrichtungen (30, 230) sind identisch aufgebaut. Beispielsweise entspricht ihr Aufbau dem Aufbau der in den Figuren 1 - 9 dargestellten Bolzenhaltevorrichtung (30). Jeweils eine Bolzenhaltevorrichtung (30; 230) ist in einem Möbelstückteil (2; 3) angeordnet. Der Bolzen (20) ist so aufgebaut wie der im Zusammenhang mit der Figur 8 beschriebene Bolzen (20).

Beim Zusammenbau des Möbelstücks (1) werden zunächst die Bolzenhaltevorrichtungen (30; 230) z.B. vom Möbelhersteller dübelartig in die Möbelstückteile (2; 3) eingesetzt. Dies erfolgt beispielsweise mittels eines Handwerkzeugs, z.B. einem Hammer oder maschinell. Der Endverbraucher setzt den Bolzen (20) zunächst in eine der Bolzenhaltevorrichtungen (30; 230) ein. Hierbei ist es ausreichend, wenn er ihn beispielsweise soweit einsetzt, wie in der Figur 8 dargestellt. Zum Fügen des so vorbereiteten ersten Möbelstückteils (2; 3) mit dem zweiten Möbelstückteil (3; 2) wird das zweite Möbelstückteil (3; 2) derart angesetzt, dass der Bolzen (20) in Richtung der Mittellinie (232) der zweiten Bolzenhaltevorrichtung (230) zeigt. Beim Zusammensetzen der beiden Möbelstückteile (2; 3) verrastet der Bolzen (20) in beiden Bolzenhaltevorrichtungen (30; 230), wie in der Figur 11 dargestellt. Die beiden Möbelstückteile (2, 3) sind jetzt unlösbar miteinander verbunden.

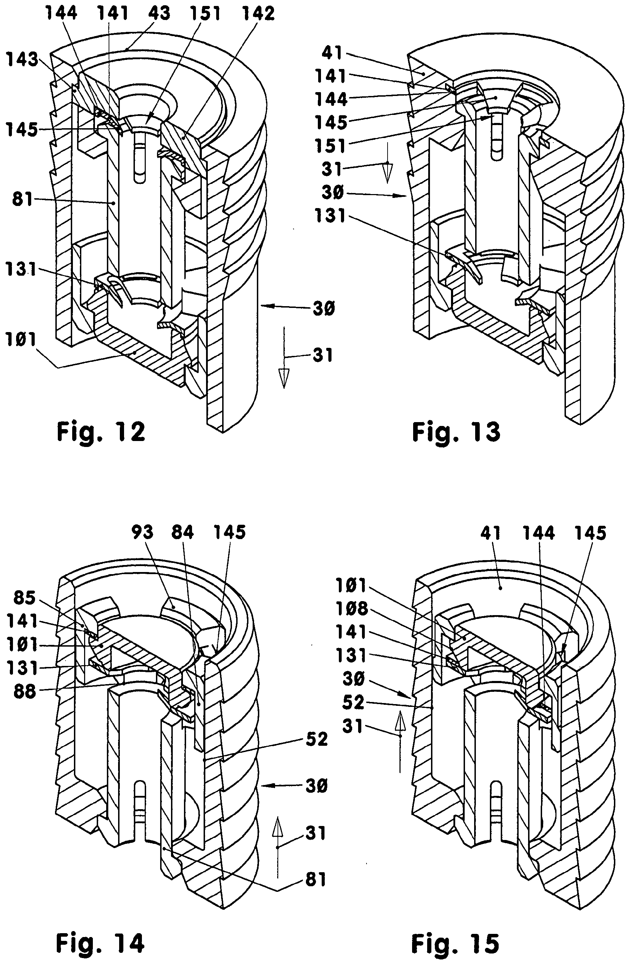

Die Figuren 12 - 15 zeigen verschiedene Varianten von Bolzenhaltevorrichtungen (30) mit unterschiedlich gestalteten Auszugssicherungen (151). In diesen Ausführungsbeispielen ist der jeweilige Federenergiespeicher (122) nicht dargestellt.

Die in der Figur 12 dargestellte Bolzenhaltevorrichtung (30) ist weitgehend so aufgebaut, wie die in den Figuren 1 - 9 dargestellte Bolzenhaltevorrichtung (30). Das Rückhalte- und Führungselement (81) stützt sich mit seinen stirnseitigen Ende an einer zweiten Klemmscheibe (141) ab. Diese zweite Klemmscheibe (141) ist in die gleiche Richtung orientiert wie die erste, vom Anschlagdeckel (101) gehaltene Klemmscheibe (131). Angrenzend an die Stirnseite (43) ist in die Einsetzhülse (41) ein Haltering (142) eingesetzt. Dieser hat einen Hintergriffsring (143), mit dem er in Einsetzhülse (41) verrastet ist. Gegebenenfalls kann der Haltering (142) mit der Einsetzhülse (41) verschweißt sein.

Der Bolzen (20) verformt beim Einschieben in die Bolzenhaltevorrichtung (30) sowohl die zweite Klemmscheibe (141) als auch die erste Klemmscheibe (131). Beide Klemmscheiben (131; 141) verhindern ein Verschieben des Bolzens (20) entgegen der Bolzeneinführrichtung (31) relativ zur Einsetzhülse (41).

Sobald der Bolzen (20) den Anschlagdeckel (101) verschiebt, werden die Scherstege (88) abgerissen. Die sich entspannende - hier nicht dargestellte - Druckfeder (122) verschiebt die erste Klemmscheibe (131) und den Bolzen (20) in der Bolzeneinführrichtung (31). Der Bolzen (20) wird eingezogen. Die zweite Klemmscheibe (141) verhindert als Auszugssicherung (151) weiterhin ein Verschieben des Bolzens (20) entgegen der Bolzeneinführrichtung (31) relativ zur Einsetzhülse (41). Der Bolzen (20) sitzt damit fest in der Einsetzhülse (41).

Auch in der in der Figur 13 dargestellten Bolzenhaltevorrichtung (30) hat eine zweite Klemmscheibe (141). Diese zweite Klemmscheibe (141) ist in die Einsetzhülse (41) eingeformt. Beispielsweise wird sie bereits bei der Herstellung der Einsetzhülse (41) im Spritzgussverfahren umspritzt.

Die Funktion der zweiten Klemmscheibe (141) in der Bolzenhaltevorrichtung (30) der Figur 13 ist identisch zur Funktion der in der Figur 12 dargestellten zweiten Klemmscheibe (141).

Die Figur 14 zeigt ebenfalls eine Bolzenhaltevorrichtung (30) mit einer Auszugssicherung (151). Die Auszugssicherung (151) wird in diesem Ausführungsbeispiel durch eine zweite Klemmscheibe (141) in der Bauform eines Zackenrings (141) gebildet. Der Zackenring (141) hat beispielsweise einen innenliegenden Tragring (144), der nach außen abstehende nasenförmige Klemmsegmente (145) aufweist. Diese Klemmsegmente (145) sind entgegen der Bolzeneinführrichtung (31) orientiert und liegen an der Innenwandung (52) der Einsetzhülse (41) an. Die Klemmscheibe (141) liegt zwischen dem Anschlagdeckel (101) und den Halteelementen (93). Die Einsetzhülse (41) kann beispielsweise auch aus einem Druckgusswerkstoff hergestellt sein. Es ist auch denkbar, eine an der Einsetzhülse (41) fixierte Klemmscheibe (141) einzusetzen, deren Nasen (145) nach innen zeigen. Diese sind dann in der Bolzeneinführrichtung (31) orientiert.

Bei der Montage wird beipielsweise zunächst der Federenergiespeicher (122) in die Einsetzhülse (41) eingesetzt. Die erste Klemmscheibe (131), der Anschlagdeckel (101) und die zweite Klemmscheibe (141) werden in die Tragvorrichtung (84) des Rückhalte- und Führungselements (81) eingesetzt und verrastet. Nach dem Einsetzen übergreifen die Halteelemente (93) der Tragvorrichtung (84) die zweite Klemmscheibe (141) und den Anschlagdeckel (101), sodass diese in ihrer Position gehalten werden. Das gesamte Rückhalte- und Führungselement (81) wird nun z.B. mittels einer die Nasen (145) der zweiten Klemmscheibe (141) belastenden Montagehilfsvorrichtung in die Einsetzhülse (41) montiert, sodass die Nasen (145) der zweiten Klemmscheibe (141) entgegen der Bolzeneinführrichtung (31) zeigen. Gegebenenfalls kann der Tragring (144) der zweiten Klemmscheibe (141) geschlitzt ausgebildet sein. Auch der Einsatz in einer aus zwei Halbschalen bestehenden Einsetzhülse (41) ist denkbar.

Der Bolzen (20), der beim Einschieben nach dem Trennen der Rückhaltevorrichtung (85) den Anschlagdeckel (101) verschiebt, verschiebt auch die Tragvorrichtung (84) relativ zur Einsetzhülse (41). Die erste Klemmscheibe (131) verhindert ein Verschieben des Bolzens (20) entgegen der Bolzeneinführrichtung (31) relativ zur Tragvorrichtung (84). Die zweite Klemmscheibe (141) blockiert eine Bewegung der Tragvorrichtung (84) entgegen der Einzugsrichtung (31) relativ zur Einsetzhülse (41). Damit wird ein Herausziehen des Bolzens (20) aus der Bolzenhaltevorrichtung (30) wirksam verhindert.

In der Figur 15 ist eine Bolzenhaltevorrichtung (30) dargestellt, deren Auszugssicherung (151) ebenfalls eine erste Klemmscheibe (131) und eine zweite Klemmscheibe (141) aufweist. Die erste Klemmscheibe (131) ist so ausgebildet und angeordnet, wie im Zusammenhang mit den vorhergehenden Ausführungsbeispielen beschrieben. Die zweite Klemmscheibe (141) liegt in diesem Ausführungsbeispiel auf der ersten Klemmscheibe (131) auf. Ihre Nasen (145) sind nach außen gerichtet und liegen an der Innenwandung (52) der Einsetzhülse (41) an. Im Ausführungsbeispiel zeigen sie entgegen der Bolzeneinführrichtung (31).

Die zweite Klemmscheibe (141) hat im Ausführungsbeispiel einen geschlitzten Tragring (144), sodass die zweite Klemmscheibe (141) bei der Montage komprimierbar ist. Der Anschlagdeckel (101) hat einen Konus (108), der beim Verrasten in der Tragvorrichtung (84) die zweite Klemmscheibe (141) spreizt. Die Montage erfolgt beispielsweise, wie im Zusammenhang mit dem vorhergehenden Ausführungsbeispiel beschrieben.

Die erste Klemmscheibe (131) kann einteilig zusammen mit der zweiten Klemmscheibe (141) ausgebildet sein. Beim Arretieren des Bolzens (20) sind die innenliegenden Nasen (133) kraft- und/oder formschlüssig mit dem Bolzen (20) verbunden. Die außen liegenden Nasen (145) liegen kraft- und/oder formschlüssig an der Innenwandung (52) der Einsetzhülse (41) an.

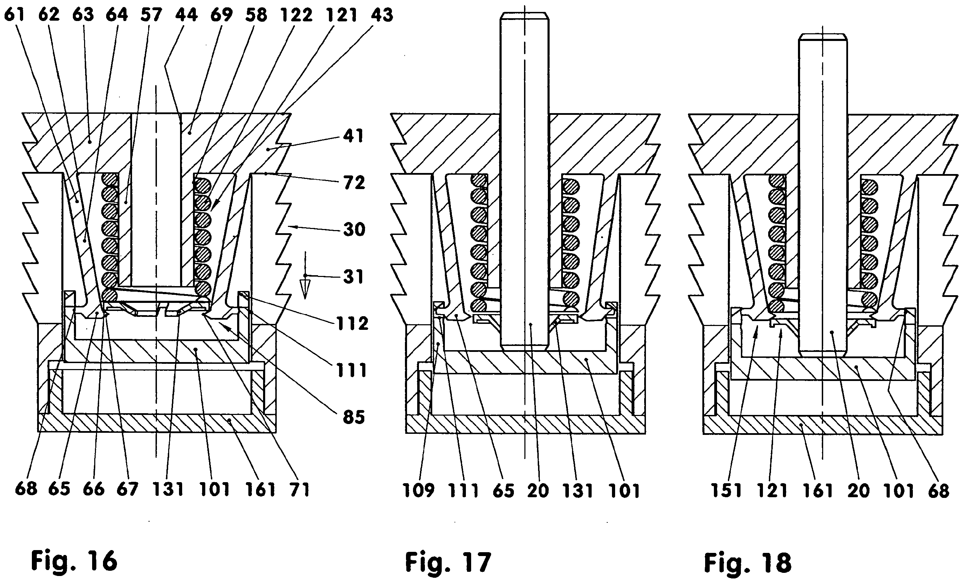

In der Figur 16 ist eine weitere Variante einer Bolzenhaltevorrichtung (30) dargestellt. Die Einsetzhülse (41) ist einteilig aufgebaut. Die Stirnseite (43) ist bis auf eine Einführöffnung (44) verschlossen. Die Einführöffnung (44) ist von einem Führungsrohr (57) umgeben, dessen Mantelfläche (58) den Federenergiespeicher (122) führt.

In Wandungsdurchbrüchen (72) der Einsetzhülse (41) sind Biegebalken (61) angeordnet, deren freie Enden im unbelasteten Zustand in die Bolzeneinführrichtung (31) zeigen. Diese Biegebalken (61) sind beispielsweise mittels elastisch verformbarer Filmgelenke (62) an einem Ringbund (63) der Einsetzhülse (41) befestigt. Im Ausführungsbeispiel hat die Einsetzhülse (41) beispielsweise zwei Biegebalken (61), sie kann aber auch drei oder mehr Biegebalken (61) aufweisen.

Der einzelne Biegebalken (61) hat einen an das Filmgelenk (62) angrenzenden Biegeabschnitt (64). Sein freies Ende ist als Haltekopf (65) ausgebildet. Der Haltekopf (65) hat in der Darstellung der Figur 16 eine dreiecksförmige Fläche. Seine in dieser Darstellung in Richtung der Einführöffnung (44) zeigende Fläche ist eine Haltefläche (66). An die Haltefläche (66) grenzt eine Gleitfläche (67) an. Die der Mittellinie (32) abgewandte Rückseite des Biegebalkens (61) bildet eine Sicherungsfläche (68), die beispielsweise eine Rastnase aufweist.

In der Einsetzhülse (41) ist weiterhin ein Anschlagdeckel (101) angeordnet. Der Anschlagdeckel (101) hat einen eine Anschlagscheibe (106) bildenden Anschlagboden (106) mit hoher Steifigkeit gegen Verformung. Der Mantel (109) des Anschlagdeckels (101) weist z.B. Rastkerben zum Halten der Rastnasen der Sicherungsflächen (68) sowie beispielsweise für jeden Biegebalken (61) einen Auslösedurchbruch (111) mit einer Sicherungsrampe (112) auf.

Auf dem Führungsrohr (57) sitzt ein Federenergiespeicher (122), der sich am Boden (69) der Einsetzhülse (41) und an einer Klemmscheibe (133) abstützt. Anstatt als Schraubenfeder (122) in der Bauform einer Druckfeder kann auch dieser Federenergiespeicher (122) als Tellerfederpaket, Elastomerkörper, etc. ausgebildet sein. Die dargestellte Druckfeder (122) belastet die Klemmscheibe (131), die in der Darstellung der Figur 16 von den Halteköpfen (65) der Biegebalken (61) abgestützt wird. Die Klemmscheibe (131) ist beispielsweise so ausgebildet wie die im Zusammenhang mit dem ersten Ausführungbeispiel beschriebene Klemmscheibe (131).

Die Figur 16 zeigt die Bolzenhaltevorrichtung (30) vor dem Einführen eines Bolzens (20). Der Federenergiespeicher (122) bildet zusammen mit der Klemmscheibe (131) eine Bolzeneinzugsvorrichtung (121). Diese Bolzeneinzugsvorrichtung (121) ist in dem in der Figur 16 dargestellten Zustand nicht aktiviert. Sie ist mittels der Biegebalken (61) blockiert, die eine Rückhaltevorrichtung (85) bilden.

Der Anschlagdeckel (101) arretiert mittels der Verrastung die Rückhaltevorrichtung (85) formschlüssig. Auch eine kraftschlüssige Arretierung der Rückhaltevorrichtung (85) ist denkbar. Der Anschlagdeckel (101) kann auch - zur Ausbildung einer Verliersicherung - mit der Innenwandung (52) der Einsetzhülse (41) verrasten.

Das Einsetzen eines Bolzens (20) in die Bolzenhaltevorrichtung (30) erfolgt, wie im Zusammenhang mit dem ersten Ausführungsbeispiel beschrieben. Der eingeschobene Bolzen (20) durchdringt die mittels der Rückhaltevorrichtung (85) gehaltene Klemmscheibe (131), die dabei - unter elastischer Verformung der Klemmscheibe (131) - auf den Bolzen (20) aufgeschoben wird.

Sobald beim weiteren Einführen des Bolzens (20) in der Bolzeneinführrichtung (31) dieser an den Anschlagdeckel (101) anschlägt, wird der Anschlagdeckel (101) in der Bolzeneinführrichtung (31) relativ zur Rückhaltevorrichtung (85) verschoben. Die in der Figur 16 dargestellte Verrastung des Anschlagdeckels (101) mit den Biegebalken (61) wird gelöst. Der Anschlagdeckel (101) bildet das Auslöseelement (101), das die Rückhaltevorrichtung (85) freigibt. Die Biegebalken (61) verformen sich in Richtung ihrer Ausgangslage elastisch zurück. Hierbei entsperren sie die Bolzeneinzugsvorrichtung (121). Der sich entspannende Federenergiespeicher (122) verschiebt die Klemmscheibe (131) in der Bolzeneinführrichtung (31). Die an den Halteflächen (66) entlang gleitende Klemmscheibe (131) verdrängt die Halteköpfe (65) zusätzlich nach außen. Der Bolzen (20) wird in die Bolzeneinzugsrichtung (31) eingezogen. Falls der Bolzen (20) bereits an seinem aus der Bolzenhaltevorrichtung (30) herausstehenden Ende festgelegt ist, wird der Bolzen (20) gespannt.

Die Figur 17 zeigt die Bolzenhaltevorrichtung (20) mit betätigtem Auslöseelement (101), gelöster Rückhaltevorrichtung (85) und freigegebener Bolzeneinzugsvorrichtung (121). Der Bolzen (20) wird mittels des Federenergiespeichers (122) und der Klemmscheibe (131) in der eingezogenen Position belastet. Die Biegebalken sind in die Auslösedurchbrüche (111) verdrängt.

Beim weiteren Verschieben des Auslöseelements (101) relativ zur Rückhaltevorrichtung (85) passiert die Klemmscheibe (131) die durch die Spitzen (71) gebildete Ebene der Halteköpfe (65). Diese Ebene ist beispielsweise normal zur Längsrichtung (33) orientiert. Der relativ zu den Biegebalken (61) verschobene Anschlagdeckel (101) gelangt nun mit den Sicherungsrampen (112) an die Halteköpfe (65) der Biegebalken (61). Die Halteköpfe (65) werden in Richtung der Mittellinie (32) verschoben.

Die Figur 18 zeigt die Bolzenhaltevorrichtung (30) mit eingeschobenen Biegebalken (61). Die Halteköpfe (65) liegen in dieser Darstellung zwischen der Klemmscheibe (131) und dem Federenergiespeicher (122). Bei einer Zugbelastung des Bolzens (20) entgegen der Bolzeneinführrichtung (31) stützt sich die Klemmscheibe (131) an den Halteköpfen (65) ab. Diese Auszugssicherung (151) verhindert so ein elastisches Verformen des Federenergiespeichers (122).

Die Montage der Bolzenhaltevorrichtung (30) in ein Möbelstückteil (2; 3) und der Einsatz der in den Figuren 16 - 18 dargestellten Bolzenhaltevorrichtung (30) erfolgt wie bei der im Zusammenhang mit den Figuren 1 - 11 beschriebenen Vorrichtung.

Auch Kombinationen der einzelnen Ausführungsbeispiele sind denkbar.

### Bezugszeichenliste:

- 1: Möbelstück
- 2: Möbelstückteil
- 3: Möbelstückteil
- 4: Sacklochbohrung
- 5: Wandung von (4)
- 6: Oberfläche

- 10: Verbindungssystem

- 20: Bolzen, Verbindungsbolzen
- 21: Mantelfläche

- 30: Bolzenhaltevorrichtung
- 31: Bolzeneinführrichtung, Bolzeneinzugsrichtung
- 32: Mittellinie
- 33: Längsrichtung

- 41: Einsetzhülse
- 42: Rückseite
- 43: Stirnseite
- 44: Einführöffnung
- 45: Mantelfläche
- 46: Halteabschnitt
- 47: Führungsabschnitt
- 48: Halteringe
- 49: Stützfläche

- 51: Gleitfläche
- 52: Innenwandung
- 53: Aufnahmeabschnitt
- 54: Durchbruch
- 55: Federsitzabschnitt
- 56: Sicherungsabschnitt
- 57: Führungsrohr
- 58: Mantelfläche
- 59: Übergangsfläche

- 61: Biegebalken
- 62: Filmgelenke
- 63: Ringbund
- 64: Biegeabschnitt
- 65: Haltekopf
- 66: Haltefläche
- 67: Gleitfläche
- 68: Sicherungsfläche
- 69: Boden

- 71: Spitzen
- 72: Wandungsdurchbrüche

- 81: Rückhalte- und Führungselement
- 82: Stützbereich
- 83: Führungsbereich
- 84: Tragbereich, Tragvorrichtung
- 85: Rückhaltevorrichtung
- 86: Längsbohrung
- 87: Stützelemente
- 88: Scherverbindungen, Scherstege
- 89: Tragboden

- 91: Mantel
- 92: Rand, umlaufend
- 93: Halteelemente
- 94: Durchbrüche
- 95: Auszugssicherungselemente
- 96: Filmgelenke
- 97: Längsschlitze

- 101: Auslöseelement, Anschlagdeckel
- 102: Mantelfläche
- 103: Umlaufbund
- 104: Rastfläche
- 105: Gleitfläche
- 106: Anschlagscheibe, Anschlagboden
- 107: Anschlagfläche
- 108: Konus
- 109: Mantel

- 111: Auslösedurchbruch
- 112: Sicherungsrampe

- 121: Bolzeneinzugsvorrichtung
- 122: Federenergiespeicher, Schraubenfeder, Druckfeder

- 131: Klemmscheibe, Federscheibe, erste Klemmscheibe
- 132: Tragring
- 133: Klemmsegmente, Nasen

- 141: zweite Klemmscheibe, Zackenring
- 142: Haltering
- 143: Hintergriffsring
- 144: Tragring
- 145: Klemmsegmente, Nasen

- 151: Auszugssicherung
- 161: Schutzdeckel

- 230: Bolzenhaltevorrichtung
- 231: Bolzeneinzugsrichtung
- 232: Mittellinie

## Patentansprüche

1. Bolzenhaltevorrichtung (30) mit einer Bolzeneinzugsvorrichtung (121) zur Befestigung eines Bolzens (20), **dadurch gekennzeichnet,**
- **dass** sie eine Rückhaltevorrichtung (85) aufweist, die bei nicht gesetztem Bolzen (20) die Bolzeneinzugsvorrichtung (121) blockiert,
- **dass** sie ein mittels des zu befestigenden Bolzens (20) betätigbares, kraft- und/oder formschlüssig mit der Rückhaltevorrichtung (85) verbundenes Auslöseelement (101) aufweist,
- **dass** die Bolzeneinzugsvorrichtung (121) eine mittels eines Federenergiespeichers (122) in einer Bolzeneinführrichtung (31) belastbare Klemmscheibe (131) aufweist,
- **dass** zumindest die Bolzeneinzugsvorrichtung (121) und das Auslöseelement (101) in einer Einsetzhülse (41) angeordnet sind,
- **dass** der Federenergiespeicher (122) die Einsetzhülse (41) entgegen der Bolzeneinführrichtung (31) belastet und
- **dass** bei Betätigung des Auslöseelements (101) die Bolzeneinzugsvorrichtung (121) entsperrbar ist.

2. Bolzenhaltevorrichtung (30) nach Anspruch 1, **dadurch gekennzeichnet, dass** das Auslöseelement (101) zur Freigabe der Rückhaltevorrichtung (85) in der Bolzeneinführrichtung (31) verschiebbar ist.

3. Bolzenhaltevorrichtung (30) nach Anspruch 1, **dadurch gekennzeichnet, dass** die Einsetzhülse (41) außen liegende Halteringe (48) aufweist.

4. Bolzenhaltevorrichtung (30) nach Anspruch 1, **dadurch gekennzeichnet, dass** die Einsetzhülse (41) spreizbar ausgebildet ist, sodass ihr Umfang mittels des Bolzens (20) aufweitbar ist.

5. Bolzenhaltevorrichtung (30) nach Anspruch 1, **dadurch gekennzeichnet, dass** sie eine die Klemmscheibe (131) entgegen der Bolzeneinführrichtung (31) arretierbare Auszugssicherung (151) aufweist.

6. System mit zwei Bolzenhaltevorrichtungen (30, 230) nach Anspruch 1, **dadurch gekennzeichnet,**
- **dass** die Bolzeneinführrichtungen (31, 231) der Bolzenhaltevorrichtungen (30, 230) entgegengesetzt orientiert sind,
- **dass** zur Bildung eines Verbindungssystems (10) ein zylindrisch ausgebildeter, gewindeloser Bolzen (20) in beide Bolzenhaltevorrichtungen (30, 230) einsetzbar und fixierbar ist.

7. Möbelstück (1) mit zwei aneinander angrenzenden Möbelstückteilen (2, 3), **dadurch gekennzeichnet, dass** die Möbelstückteile (2, 3) mittels eines Systems nach Anspruch 6 mit eingesetztem Bolzen (20) verbunden sind.

## Claims

1. Pin holding device (30) with a pin draw-in device (121) for fastening a pin (20), **characterized in that**:
- it has a retaining device (85) which blocks the pin draw-in device (121) when the pin (20) is not placed,
- it has a release element (101) which can be activated by means of the pin (20) to be fastened and which is connected to the retaining device (85) with a force fit and/or form fit,
- the pin draw-in device (121) has a clamping disk (131) which can be loaded in a pin insertion direction (31) by means of a spring energy store (122),
- at least the pin draw-in device (121) and the release element (101) are arranged in an insertion sleeve (41),
- the spring energy store (122) loads the insertion sleeve (41) counter to the pin insertion direction (31), and
- the pin draw-in device (121) can be unblocked upon actuation of the release element (101).

2. Pin holding device (30) according to claim 1, **characterized in that** the release element (101) can be displaced to release the retaining device (85) in the pin insertion direction (31).

3. Pin holding device (30) according to claim 1, **characterized in that** insertion sleeve (41) has external retaining rings (48).

4. Pin holding device (30) according to claim 1, **characterized in that** the insertion sleeve (41) is designed to be expandable so that its circumference can be expanded by means of the pin (20).

5. Pin holding device (30) according to claim 1, **characterized in that** it has pull-out prevention means (151) which can lock the clamping disk (131) counter to the pin insertion direction (31).

6. System with two pin holding devices (30, 230) according to claim 1, **characterized in that**:
- the pin insertion directions (31, 231) of the pin holding devices (30, 230) are oriented opposite,
- a cylindrically shaped, threadless pin (20) can be inserted and fixed into both pin holding devices (30, 230) to form a connection system (10).

7. Piece of furniture (1) with two adjacent furniture parts (2, 3), **characterized in that** the furniture parts (2, 3) are connected using a pin (20) inserted by means of a system according to claim 6.

## Revendications

1. Dispositif de maintien d'un boulon (30), pourvu d'un dispositif de rentrée du boulon (121), pour la fixation d'un boulon (20), **caractérisé**
- **en ce qu'**il comporte un dispositif de retenue (85), qui lorsque le boulon (20) n'est pas posé, bloque le dispositif de rentrée du boulon (121),
- **en ce qu'**il comporte un élément déclencheur (101), actionnable au moyen du boulon (20) qui doit être fixé, assemblé par complémentarité de force et/ou de forme avec le dispositif de retenue (85),
- **en ce que** le dispositif de rentrée du boulon (121) comporte une rondelle de serrage (131) susceptible d'être contrainte par un accumulateur d'énergie de ressort (122) dans une direction d'introduction du boulon (31),
- **en ce qu'**au moins le dispositif de rentrée du boulon (121) et l'élément déclencheur (101) sont placés dans une douille d'insertion (41),
- **en ce que** l'accumulateur d'énergie de ressort (122) contraint la douille d'insertion (41) à l'encontre de la direction d'introduction du boulon (31) et
- **en ce que** lors de l'actionnement de l'élément déclencheur (101), le dispositif de rentrée du boulon (121) est susceptible d'être débloqué.

2. Dispositif de maintien d'un boulon (30) selon la revendication 1, **caractérisé en ce que** pour libérer le dispositif de retenue (85), l'élément déclencheur (101) est déplaçable dans la direction d'introduction du boulon (31).

3. Dispositif de maintien d'un boulon (30) selon la revendication 1, **caractérisé en ce que** la douille d'insertion (41) comporte des bagues de maintien (48) situées à l'extérieur.

4. Dispositif de maintien d'un boulon (30) selon la revendication 1, **caractérisé en ce que** la douille d'insertion (41) est conçue de manière expansible, de sorte que sa circonférence soit susceptible d'être élargie au moyen du boulon (20).

5. Dispositif de maintien d'un boulon (30) selon la revendication 1, **caractérisé en ce qu'**il comporte une sécurité contre l'arrachement (151), susceptible de bloquer la rondelle de serrage (131) à l'encontre de la direction d'introduction du boulon (31).

6. Système, pourvu de deux dispositifs de maintien d'un boulon (30, 230) selon la revendication 1, **caractérisé**
- **en ce que** les directions d'introduction du boulon (31, 231) des dispositifs de maintien d'un boulon (30, 230) sont orientés en sens opposé,
- **en ce que** pour créer un système d'assemblage (10), un boulon (20) sans filetage, conçu de forme cylindrique est susceptible d'être inséré et fixé dans les deux dispositifs de maintien d'un boulon (30, 230) .

7. Meuble (1) pourvu de deux pièces de meuble (2, 3) adjacentes, **caractérisé en ce que** les pièces de meuble (2, 3) sont assemblées au moyen d'un système selon la revendication 6 avec un boulon (20) inséré.
